# EUROPÄISCHE PATENTSCHRIFT

(11) **EP 3 362 300 B1**
(45) Veröffentlichungstag und Bekanntmachung des Hinweises auf die Patenterteilung: **25.03.2020**
(21) Anmeldenummer: 16733982.9
(22) Anmeldetag: 04.07.2016
(51) Int. Cl.: B60C 11/03, B60C 11/00, B60C 11/02, B60C 5/14

(54) **NUTZFAHRZEUGREIFEN**
COMMERCIAL VEHICLE TIRES
PNEUMATIQUES POUR VÉHICULES UTILITAIRES

(30) Priorität: 14.10.2015 DE 102015219976
(43) Veröffentlichungstag der Anmeldung: 22.08.2018
(73) Patentinhaber: Continental Reifen Deutschland GmbH, 30165 Hannover (DE)
(72) Erfinder: KLEFFMANN, Jens, 30453 Hannover (DE); HODONOVA, Katarina, 01311 Liet. Lucka (SK)
(74) Vertreter: Finger, Karsten
(86) Internationale Anmeldenummer: PCT/EP2016/065630
(87) Internationale Veröffentlichungsnummer: WO 2017/063766

(56) Entgegenhaltungen:
- DE-A1- 2 153 564
- DE-A1-102010 000 637
- DE-A1-102010 016 469
- US-A1- 2014 332 132

## Beschreibung

Die Erfindung betrifft einen Nutzfahrzeugreifen mit einem nachgeschnittenen Laufstreifen.

Nutzfahrzeugreifen müssen eine Vielzahl von Anforderungen bezüglich ihrer Leistungsmerkmale erfüllen. Von besonderer Bedeutung sind dabei die Laufleistung und ein möglichst geringer Rollwiderstand. Bei Nutzfahrzeugreifen soll ferner die Runderneuerungsfähigkeit gegeben sein und es ist gerade bei dieser Art von Reifen üblich, zur Erhöhung der Laufleistung die Nachschneidefähigkeit des Laufstreifens zu gewährleisten. Voraussetzung dafür ist eine hohe Grundstärke, also eine gewisse Materialdicke zwischen der radial äußersten Gürtellage und der tiefsten Stelle am Rillengrund der Umfangsrillen. Eine hohe Grundstärke unterstützt auch die Runderneuerungsfähigkeit des Reifens, was für die Wirtschaftlichkeit des Reifens von Vorteil ist.

Es ist ferner bekannt, bei Nutzfahrzeugreifen zur Reduzierung des Rollwiderstandes den Laufstreifen zweischichtig auszuführen, und zwar mit einer Laufstreifenbase und einer radial außerhalb der Laufstreifenbase befindlichen Laufstreifencap. Die Laufstreifencap ist jener Teil des Laufstreifens, der im Normalbetrieb des Reifens bis zum Erreichen der Mindestprofiltiefe mit dem Untergrund in Kontakt kommt. Die Laufstreifenbase wird üblicherweise aus einer Gummimischung gefertigt, die sich besonders vorteilhaft auf den Rollwiderstand auswirkt und entsprechende Dämpfungseigenschaften aufweist. Je größer der Anteil des Volumens der Laufstreifenbase am Gesamtvolumen des Laufstreifens ist, umso größer ist die erzielbare Reduktion des Rollwiderstandes. Bei Nutzfahrzeugreifen beträgt ferner die Nachschneidetiefe üblicherweise 1,5 mm bis 5 mm, ausgehend vom Rillengrund jener Umfangsrillen, welche bei neuem Reifen in der maximalen Profiltiefe ausgeführt sind. Bei Erreichen einer gewissen Profiltiefe, üblicherweise der gesetzlichen Mindestprofiltiefe, werden diese Rillen und gegebenenfalls auch andere Rillen, wie Querrillen, Schrägrillen und dergleichen, nachgeschnitten und gegebenenfalls zusätzlich eingeschnitten, wodurch die Profiltiefe neuerlich erhöht wird und ein weiterer Reifeneinsatz möglich ist. Dadurch erhöht sich auch die Nutzungsdauer des Reifens, da der nachgeschnittene Reifen bis zur gesetzlichen Mindestprofiltiefe abgefahren werden darf, welche sich auf die Rillentiefe der nachgeschnittenen Rillen bezieht. Durch diese Maßnahme kann die Kilometerleistung der Nutzfahrzeugreifens üblicherweise um 10 % bis 25 % erhöht werden.

Aus der DE 10 2010 000 637 A1 ist ein Nutzfahrzeugreifen mit einem nachschneidbaren Laufstreifen bekannt, welcher sich aus einer die Profilierung enthaltenden radial äußeren Schicht mit einer Dicke von 6,0 mm bis 25,0 mm und einer radial inneren Schicht, der sogenannten "Nachschneidreserve", mit einer Dicke von mindestens 5,0 mm zusammensetzt. Das Rillenvolumen sämtlicher im Laufstreifen befindlicher Rillen beträgt maximal 16% des Bruttovolumens der die Profilierung enthaltenden radial äußeren Schicht des Laufstreifens. Durch diese Maßnahmen soll der Nutzfahrzeugreifen einen geringen Rollwiderstand aufweisen.

Die DE 10 2010 016 469 A1 offenbart einen weiteren Nutzfahrzeugreifen, welcher einen geringen Rollwiderstand aufweisen soll. Der Laufstreifen des Nutzfahrzeugreifens weist drei Umfangsrillen auf, welche gemeinsam ein Rillenvolumen von 5% bis 28% des Laufstreifen-Bruttovolumens einnehmen. Eine der Umfangsrillen verläuft im Reifenzenit, die anderen beiden Umfangsrillen verlaufen im Bereich der Gürtelkanten der breitesten Gürtellage. Die im Bereich der Gürtelkanten verlaufenden Umfangsrillen weisen jeweils ein Rillenvolumen von 1,25% bis 7% des Laufstreifen-Bruttovolumens auf, die im Reifenzenit verlaufende Umfangsrille weist zumindest ein doppelt so großes Rillenvolumen auf.

Aus der EP 2 477 824 B1 ist ein Nutzfahrzeugreifen mit einem in radialer Richtung zweischichtig aufgebauten Laufstreifen aus einer Laufstreifencap und einer Laufstreifenbase bekannt, wobei die Laufstreifenbase aus einem breiten zentralen Abschnitt und zwei seitlichen, schulterseitigen Abschnitten besteht. Die Gummimischung im zentralen Abschnitt der Laufstreifenbase unterscheidet sich von jener in den beiden seitlichen Abschnitten.

Die DE 21 53 564 A1 offenbart einen weiteren Nutzfahrzeugreifen mit einem in radialer Richtung zweischichtig aufgebauten Laufstreifen mit einer Laufstreifencap und einer Laufstreifenbase. Die Laufstreifencap besteht aus einem Gummimaterial mit einem bei 100% Dehnung ermittelten Elastizitätsmodul von mindestens 40 kg/cm², die Laufstreifenbase besteht aus einem Gummimaterial, deren Elastizitätsmodul bei 100% Dehnung geringer ist als jene des Gummimateriales der Laufstreifencap. Ein solcher Nutzfahrzeugreifen soll eine hohe Abriebbeständigkeit aufweisen.

Aus der US 2014/0332132 A1 ist ein Nutzfahrzeugreifen mit einem in radialer Richtung zweischichtig aufgebauten Laufstreifen bekannt. Der Verlustfaktor und die Reißdehnung des Gummimateriales der Laufstreifenschichten sollen im Hinblick auf die Abriebbeständigkeit des Laufstreifens auf vorteilhafte Weise ausgelegt sein.

Der Erfindung liegt die Aufgabe zugrunde, die Wirtschaftlichkeit von Nutzfahrzeugreifen weiter zu verbessern, insbesondere durch eine weitere Verbesserung des Rollwiderstandes, durch Sicherstellen einer guten Runderneuerungsfähigkeit und der Nachschneidefähigkeit des Laufstreifens.

Gelöst wird die gestellte Aufgabe erfindungsgemäß durch einen Nutzfahrzeugreifen mit einem nachgeschnittenen Laufstreifen, welcher aufweist
- in radialer Richtung mindestens zwei aus unterschiedlichen Gummimischungen bestehende Schichten, nämlich eine Laufstreifencap und eine Laufstreifenbase, und ggf. weitere Gummimischungen,
- zumindest zwei in Umfangsrichtung des Reifens umlaufende Umfangsrillen, die jeweils einen Rillengrund aufweisen,
- mindestens eine in Umfangsrichtung des Reifens über den Umfang des Reifens verlaufende Profilrippe, welche in ihrer axialen Ausdehnung von ein oder zwei Umfangsrillen begrenzt ist und
- gegebenenfalls als weitere Rillen Querrillen, Schrägrillen und dergleichen,
wobei sich die Laufstreifenbase innerhalb jeder Profilrippe radial nach auswärts über eine entlang der tiefsten Stellen der Umfangsrillen parallel zur Laufstreifenperipherie verlaufenden Einhüllenden hinaus um 0,5 mm bis 2,0 mm erstreckt und wobei der nachgeschnittene Laufstreifen, unmittelbar nach dem durchgeführten Nachschneiden, ein Rillenvolumen aufweist, welches mindestens 30% des Bruttovolumens des nachgeschnittenen Laufstreifens beträgt, wobei das Bruttovolumen zwischen einer von radial innen die nachgeschnittenen Umfangsrillen berührenden Einhüllenden, der Laufstreifenperipherie und schulterseitigen Flankenabschnitten des Laufstreifens vorliegt und das Rillenvolumen das Volumen sämtlicher nachgeschnittener Rillen ist.

Der Anteil des Volumens der Laufstreifenbase beim neuen Reifen ist daher relativ hoch. Der Neureifen weist daher bereits einen vergleichsweise niedrigen Rollwiderstand auf. Beim nachgeschnittenen Reifen gemäß der Erfindung, kommt gegen Ende des Reifenlebens die Basemischung in Kontakt mit der Fahrbahn. Durch das Nachschneiden gemäß der Erfindung wird die Laufstreifenrobustheit beim üblichen Straßeneinsatz des Nutzfahrzeugreifens optimiert und somit die Runderneuerungsfähigkeit des Reifens sichergestellt und gegebenenfalls verbessert. Der hohe Anteil an Rillenvolumen im nachgeschnittenen Zustand ermöglicht eine relativ hohe Beweglichkeit der Profilelemente, die Schäden am Gummimaterial des nachgeschnittenen Reifens reduzieren hilft, insbesondere werden bei höherer Profilbeweglichkeit Steine, die in den Rillen eingefangen werden, leichter wieder ausgeworfen.

Durch die erfindungsgemäße Ausführung des Nutzfahrzeugreifens ist es möglich, dem nachgeschnittenen Laufstreifen ein relativ hohes Rillenvolumen zu verleihen.

Zur Erzielung eines relativ hohen Rillenvolumens des nachgeschnittenen Laufstreifens ist es ferner besonders vorteilhaft, wenn mindestens eine nachgeschnittene Umfangsrille, vorzugsweise sämtliche nachgeschnittenen Umfangsrillen, eine gewisse Mindestbreite, ermittelt an der Laufstreifenperipherie, aufweist bzw. aufweisen. Bei einer bevorzugten Ausführungsform der Erfindung beträgt diese Mindestbreite mindestens 10 mm, bevorzugt mindestens 12 mm, besonders bevorzugt mindestens 15 mm und insbesondere mindestens 18 mm.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Teilquerschnitt durch einen Nutzfahrzeugreifen im neuen Zustand,
Fig. 2 einen Teilquerschnitt gemäß Fig. 1 mit auf Mindestprofiltiefe abgefahrenem Laufstreifen,
Fig. 3 einen Teilquerschnitt gemäß Fig. 1 mit einem nachgeschnittenen Laufstreifen und
Fig. 4 eine Draufsicht auf einen Umfangsabschnitt einer Abwicklung eines Laufstreifens eines Nutzfahrzeugreifens, wobei in der unteren Hälfte der Laufstreifen im neuen Zustand und in der oberen Hälfte unmittelbar nach dem Nachschneiden dargestellt ist.

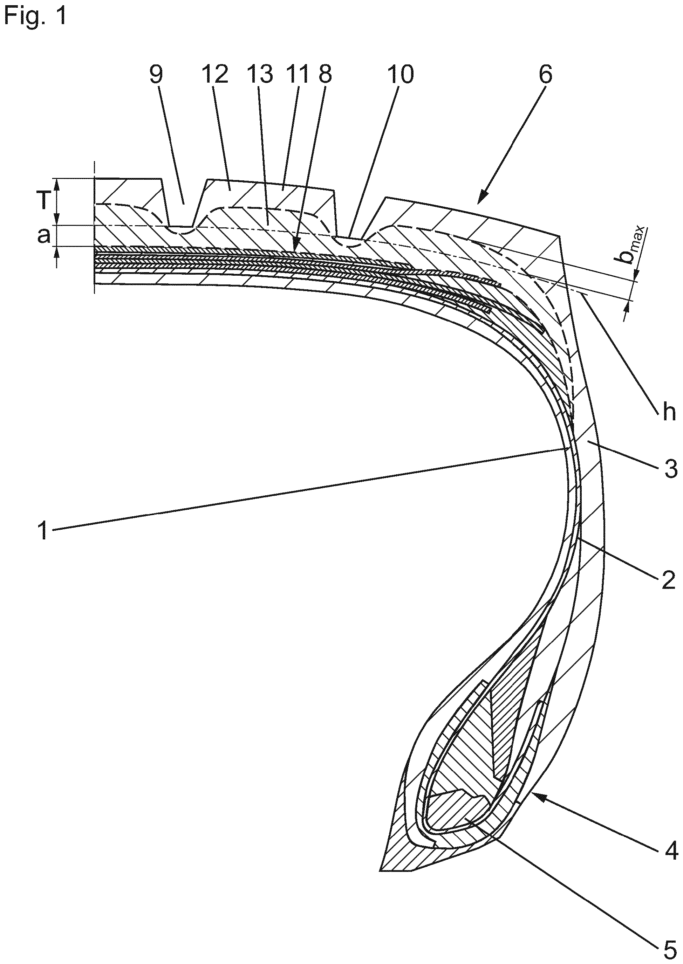

Fig. 1 zeigt die rechte Hälfte eines Teilquerschnittes durch einen Fahrzeugluftreifen für Nutzfahrzeuge, beispielsweise für Lastkraftwagen oder Busse. Von den üblichen Bauteilen eines Nutzfahrzeugreifens sind eine luftundurchlässige Innenschicht 1, eine zumindest eine Festigkeitsträgerlage beinhaltende Karkasse 2, die in herkömmlicher Weise vom Zenitbereich des Fahrzeugluftreifens über Seitenwände 3 bis in Wulstbereiche 4 reicht und dort durch Umschlingen zugfester Wulstkernen 5 verankert ist, ein radial außerhalb der Karkasse 2 befindlicher profilierter Laufstreifen 6 und ein zwischen dem Laufstreifen 6 und der Karkasse 2 angeordneter, sich in Umfangsrichtung des Reifens über den Umfang erstreckender Gürtel 8 mit einer Anzahl von Gürtellagen, insbesondere vier Gürtellagen mit in Gummi eingebetteten Festigkeitsträgern, insbesondere Stahlkorden, dargestellt.

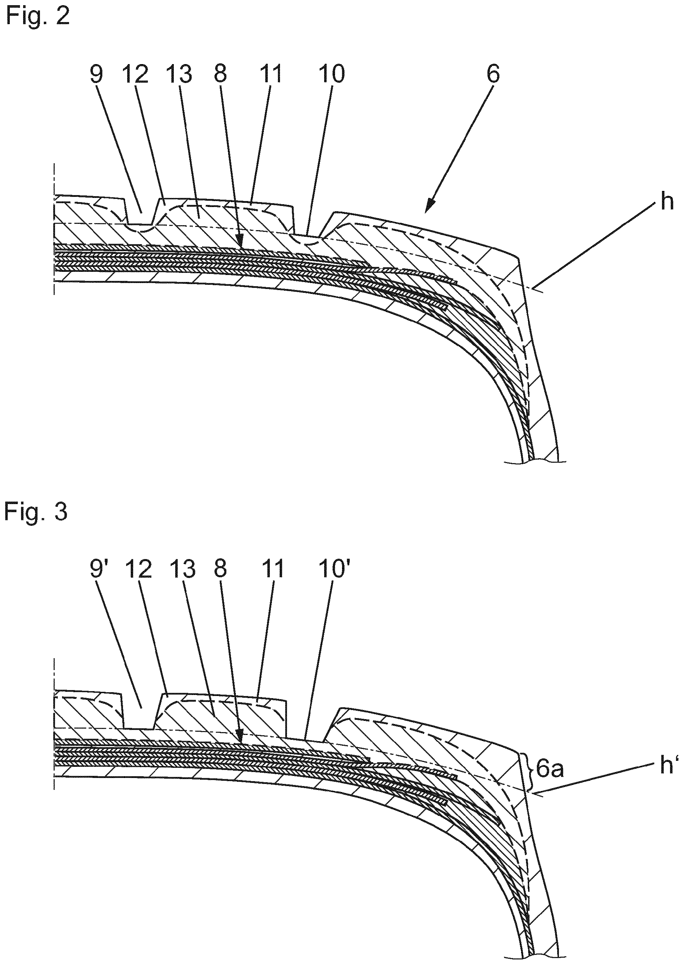

Der profilierte Laufstreifen 6 umfasst in dem in Fig. 1 bis 3 gezeigten Bereich zwei in Umfangsrichtung des Reifens umlaufende Umfangsrillen 9, deren Tiefe T der maximalen Profiltiefe des betreffenden Reifentyps entspricht, die bei neuen Nutzfahrzeugreifen üblicherweise 8 mm bis 25 mm beträgt. Die auf die maximale Profiltiefe T ausgeführten Umfangsrillen 9 weisen einen Rillengrund 10 auf. Die Stärke a der zwischen der tiefsten Stelle des Rillengrundes 10 und der radial äußersten Gürtellage befindlichen Gummischicht beträgt 4 mm bis 7 mm, insbesondere mindestens 5 mm. Der Laufstreifen 6 ist daher nachschneidefähig. Je nach der Stärke a der Gummischicht beträgt die Nachschneidetiefe 1,5 mm bis 5 mm, ausgehend vom Rillengrund 10 der Umfangsrillen 9 des Neureifens. Entlang der tiefsten Stellen der Rillengründe 10 ist eine zumindest im Wesentlichen parallel zur Laufstreifenaußenfläche und in Umfangsrichtung innerhalb des Laufstreifens 6 umlaufende Einhüllende durch eine in Fig. 1 und Fig. 2 eingezeichnete Hilfslinie h versinnbildlicht. In Fig. 3, welche, wie noch beschrieben wird, nachgeschnittene Umfangsrillen 9' zeigt, ist entlang der tiefsten Stelle der Rillengründe 10' der nachgeschnittenen Umfangsrillen 9' eine analog verlaufende Einhüllende durch eine Hilfslinie h' versinnbildlicht. Der Laufstreifen 6 weist ferner mehrere in Umfangsrichtung des Reifens umlaufende Profilrippen 11 auf, welche in ihrer axialen Ausdehnung, je nach Position im Laufstreifen, von ein oder zwei Umfangsrillen 9 begrenzt sind.

Der in den Figuren dargestellte Laufstreifen 6 weist in radialer Richtung zwei aus unterschiedlichen Gummimischungen bestehende Schichten auf, eine Laufstreifencap 12, welche die radial äußere Schicht bildet und jene ist, welche bei neuem Reifen in Kontakt mit dem Untergrund kommt, und radial innerhalb der Laufstreifencap 12 eine Laufstreifenbase 13, welche im Bereich des Rillengrundes 10 der Umfangsrillen 9 in einem kleinen Abstand zum Rillengrund 10 verläuft und sich zwischen den Umfangsrillen 9 in die Profilrippen 11 hinein erstreckt. Im Bereich der Umfangsrille 9 verläuft daher die Laufstreifenbase 13 lokal radial innerhalb der durch die Hilfslinie h gekennzeichneten Einhüllenden, im Bereich der Profilrippen 11 radial außerhalb der Einhüllenden. Die radiale Erstreckung bₘₐₓ der Laufstreifenbase 13 innerhalb der Profilrippen 11, bezogen auf die durch die Hilfslinie h gekennzeichnete Einhüllende, beträgt 0,5 mm bis 2,0 mm.

Die Laufstreifenbase 13 ist aus einer Gummimischung erstellt, deren Dämpfungseigenschaften einen geringen Rollwiderstand unterstützen. Insbesondere weist die Gummimischung der Laufstreifenbase 13 eine Rückprallelastizität bei 70° C von mindestens 70 Punkten, vorzugsweise von mindestens 75 Punkten, gemessen gemäß DIN 35512, auf. Dabei weist die Gummimischung der Laufstreifenbase 13 eine um mindestens 5 Punkte höhere Rückprallelastizität bei 70° C auf als die Gummimischung der Laufstreifencap 12, gemessen gemäß DIN 35512.

Der Laufstreifen kann in radialer Richtung mehr als zwei Schichten aus unterschiedlichen Gummimischungen aufweisen und es können die vorgesehenen Schichten selbst in axialer Richtung aus Abschnitten mit unterschiedlichen Gummimischungen bestehen.

Fig. 1 zeigt einen möglichen Verlauf der Laufstreifenbase 13 am Beispiel des neuen, nicht nachgeschnittenen Reifens. Bei weiteren möglichen, nicht gezeigten Ausführungsformen des Verlaufes der Laufstreifenbase 13 steht beispielsweise die Laufstreifenbase 13 in direktem Kontakt zu den Rillenwänden, so dass beispielsweise im Rillengrund 10 oder im unteren Bereich der Rillen 9 die Laufstreifenbase 13 an der Rillenoberfläche liegt und somit nicht durch die Laufstreifencap 12 abgedeckt ist.

Fig. 3 zeigt einen möglichen Verlauf der Laufstreifenbase 13 am Beispiel des erfindungsgemäß nachgeschnittenen Reifens. Weitere mögliche Ausführungsformen des Verlaufes der Laufstreifenbase 13 beinhalten beispielsweise, dass auch bei nachgeschnittenem Reifen die Laufstreifenbase 13 nicht in direktem Kontakt zu den nachgeschnittenen Rillen 9' steht, so dass beispielsweise im Rillengrund 10' oder im unteren Bereich der Rillen 9' die Laufstreifencap 12 an der Rillenoberfläche der nachgeschnittenen Rillen 9' liegt und somit die Laufstreifenbase 13 keinen direkten Kontakt zur Oberfläche der nachgeschnittenen Rillen 9' aufweist.

Fig. 2 zeigt den Laufstreifen 6 im abgefahrenen Zustand bei Erreichen der Mindestprofiltiefe, die beispielsweise 2,0 mm betragen kann. Der Laufstreifen kann nun nachgeschnitten werden, wobei bei nachgeschnittenem Laufstreifen gemäß Fig. 3 die durch die Hilfslinie h' versinnbildlichte Einhüllende, die Laufstreifenperipherie und die schulterseitigen Flankenabschnitte 6a des Laufstreifens 6 ein Bruttovolumen V umschließen, welches die Summe des eingeschlossenen Gummivolumens und des Rillenvolumen V_{R} ist. Das Rillenvolumen V_{R} ist die Summe der "Luftvolumina" sämtlicher nachgeschnittener Rillen, zu welchen die Umfangsrillen 9' und sämtliche gegebenenfalls ebenfalls nachgeschnittenen Querrillen, Diagonalrillen, Schrägrillen und dergleichen gehören. Diese Luftvolumina werden zwischen den Rillenbegrenzungen bzw. Rillenwänden der nachgeschnittenen Rillen und der Einhüllenden der Laufstreifenperipherie bei auf Mindestprofiltiefe abgefahrenem Laufstreifen 6 ermittelt. Gemäß der Erfindung wird der Nutzfahrzeugreifen derart nachgeschnitten, dass der Anteil des Rillenvolumens V_{R} am Bruttovolumen V mindestens 30% beträgt. Zusätzlich kann zumindest eine der nachgeschnittenen Umfangsrillen 9' an der Laufstreifenperipherie eine Mindestbreite von 10 mm, insbesondere von 12 mm, vorzugsweise von 15 mm und besonders bevorzugt von 18 mm, aufweisen. Bei der Ermittlung des Rillenvolumens V_{R} bleiben etwaige noch vorhandene Volumina von nicht nachgeschnittenen Rillen oder Einschnitten unberücksichtigt.

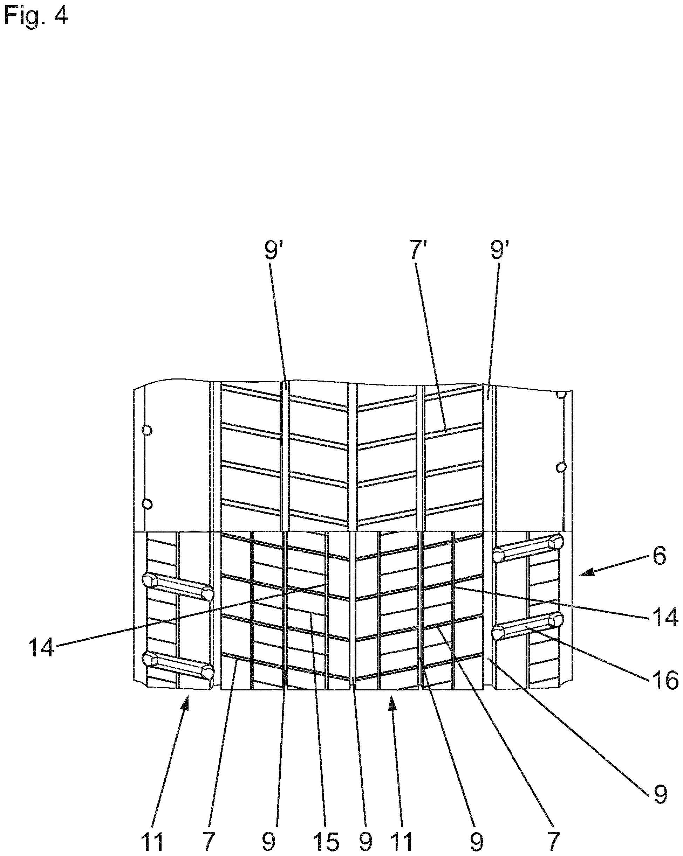

In der unteren Hälfte der Fig. 4 ist eine Variante eines Laufstreifen 6 eines neuen Reifens dargestellt, welcher beispielhaft fünf in Umfangsrichtung umlaufende Umfangsrillen 9 aufweist, sodass der Laufstreifen 6 sechs Profilrippen 11 besitzt. Dabei sind die beiden laufstreifenschulterseitig verlaufenden Umfangsrillen 9 breiter als die im mittleren Bereich des Laufstreifens 6 verlaufenden Umfangsrillen 9. Der Laufstreifen 6 des Neureifens ist ferner in den vier mittleren Profilrippen 11 mit einer Anzahl von Querrillen 7 versehen, welche den Profilrippen 11 eine blockartige Struktur verleihen. Die Querrillen 7 sind schmäler ausgeführt als die Umfangsrillen 9 und weisen beispielsweise eine Breite von 3 mm bis 4 mm auf. In den vier mittleren Profilrippen 11 sind ferner weitere, schmäler als die Umfangsrillen 9 ausgeführte Umfangsrillen 14 ausgebildet, wobei zwischen diesen und den Umfangsrillen 9 zusätzliche Querrillen 15 verlaufen, die ebenfalls relativ schmal ausgeführt sind. Bei dem gezeigten Beispiel sind die weiteren Umfangsrillen 14 und die zusätzlichen Querrillen 15 in einer Tiefe ausgeführt, die geringer ist als die Mindestprofiltiefe. Die Querrillen 7 und die Umfangsrillen 9 weisen eine Tiefe auf, die der maximal vorgesehenen Profiltiefe entspricht. In den schulterseitigen Profilrippen 11 verlaufen ebenfalls Querrillen 16, deren Tiefe geringer ist als die Mindestprofiltiefe. Ist nun bei diesem Beispiel die Mindestprofiltiefe erreicht, so sind die weiteren Umfangsrillen 14 und die Querrillen 15, 16 bereits abgefahren, das Nachschneiden des Laufstreifens 6 erfolgt durch ein Nachschneiden der Umfangsrillen 9 und der Querrillen 7, wobei bei dem gezeigten Beispiel sowohl die nachgeschnittenen Umfangsrillen 9' als auch die nachgeschnittenen Querrillen 7' eine größere Breite ausweisen als die ursprünglichen Umfangsrillen 9 und die ursprünglichen Querrillen 7, wie es in der oberen Hälfte der Fig. 4 zu sehen ist. In diesem Beispiel ist daher das Rillenvolumen V_{R} das Summenvolumen der Umfangsrillen 9' und der Querrillen 7'.

Das nachgeschnittene Profil besteht daher entweder ausschließlich aus Umfangsrillen oder aus einer Kombination von Umfangsrillen mit Querrillen oder sonstigen, insbesondere unter einem spitzen Winkel zur Umfangsrichtung verlaufenden Schrägrillen, Diagonalrillen und dergleichen.

### Bezugsziffernliste

- 1: Innenschicht
- 2: Karkasse
- 3: Seitenwand
- 4: Wulstbereich
- 5: Wulstkern
- 6: Laufstreifen
- 6a: Flankenabschnitt
- 7, 7': Querrille
- 8: Gürtel
- 9, 9': Umfangsrille
- 10, 10': Rillengrund
- 11: Profilrippe
- 12: Laufstreifencap
- 13: Laufstreifenbase
- 14: Umfangsrille
- 15, 16: Querrille
- a: Stärke
- bₘₐₓ: Erstreckung
- h, h': Hilfslinie
- T: Tiefe
- V: Bruttovolumen
- V_{R}: Rillenvolumen

## Patentansprüche

1. Nutzfahrzeugreifen mit einem nachgeschnittenen Laufstreifen (6), welcher aufweist
- in radialer Richtung mindestens zwei aus unterschiedlichen Gummimischungen bestehende Schichten, nämlich eine Laufstreifencap (12) und eine Laufstreifenbase (13), und ggf. weitere Gummimischungen,
- zumindest zwei in Umfangsrichtung des Reifens umlaufende Umfangsrillen (9), die jeweils einen Rillengrund (10) aufweisen,
- mindestens eine in Umfangsrichtung des Reifens über den Umfang des Reifens verlaufende Profilrippe (11), welche in ihrer axialen Ausdehnung von ein oder zwei Umfangsrillen (9') begrenzt ist und
- gegebenenfalls als weitere Rillen Querrillen (7), Schrägrillen und dergleichen, wobei sich die Laufstreifenbase (13) innerhalb jeder Profilrippe (11) radial nach auswärts über eine entlang der tiefsten Stellen der Umfangsrillen (9) parallel zur Laufstreifenperipherie verlaufenden Einhüllenden (h) hinaus um 0,5 mm bis 2,0 mm erstreckt und
wobei der nachgeschnittene Laufstreifen (6), unmittelbar nach dem durchgeführten Nachschneiden, ein Rillenvolumen (V_{R}) aufweist, welches mindestens 30% des Bruttovolumens (V) des nachgeschnittenen Laufstreifens (6) beträgt, wobei das Bruttovolumen (V) zwischen einer von radial innen die nachgeschnittenen Umfangsrillen (9') berührenden Einhüllenden (h'), der Laufstreifenperipherie und schulterseitigen Flankenabschnitten des Laufstreifens (6) vorliegt und das Rillenvolumen (V_{R}) das Volumen sämtlicher nachgeschnittener Rillen (9', 7') ist.

2. Nutzfahrzeugreifen nach Anspruch 1, **dadurch gekennzeichnet, dass** mindestens eine nachgeschnittene Umfangsrille (9') eine Mindestbreite von 10 mm aufweist.

3. Nutzfahrzeugreifen nach Anspruch 1 oder 2, **dadurch gekennzeichnet, dass** mindestens eine nachgeschnittene Umfangsrille (9') eine Mindestbreite von 12 mm aufweist.

4. Nutzfahrzeugreifen nach einem der Ansprüche 1 bis 3, **dadurch gekennzeichnet, dass** mindestens eine nachgeschnittene Umfangsrille (9') eine Mindestbreite von 15 mm aufweist.

5. Nutzfahrzeugreifen nach einem der Ansprüche 1 bis 4, **dadurch gekennzeichnet, dass** mindestens eine nachgeschnittene Umfangsrille (9') eine Mindestbreite von 18 mm aufweist.

## Claims

1. Commercial vehicle tyre with a regrooved tread (6), which has
- in the radial direction at least two layers consisting of different rubber compounds, to be specific a tread cap (12) and a tread base (13), and possibly further rubber compounds,
- at least two circumferential grooves (9), which run around in the circumferential direction of the tyre and in each case have a groove base (10),
- at least one profiled rib (11), which runs in the circumferential direction of the tyre over the circumference of the tyre and is bounded in its axial extent by one or two circumferential grooves (9'), and
- possibly, as further grooves, transverse grooves (7), oblique grooves and the like, wherein, within each profiled rib (11), the tread base (13) extends radially outwards by 0.5 mm to 2.0 mm beyond an envelope (h) running along the deepest points of the circumferential grooves (9) parallel to the tread periphery, and
wherein, immediately after the regrooving has been carried out, the regrooved tread (6) has a groove volume (V_{R}) which is at least 30% of the gross volume (V) of the regrooved tread (6), wherein the gross volume (V) is formed between an envelope (h') which contacts the regrooved circumferential grooves (9') from radially inside, the tread periphery and shoulder-side flank portions of the tread (6), and the groove volume (V_{R}) is the volume of all of the regrooved grooves (9', 7').

2. Commercial vehicle tyre according to Claim 1, **characterized in that** at least one regrooved circumferential groove (9') has a minimum width of 10 mm.

3. Commercial vehicle tyre according to Claim 1 or 2, **characterized in that** at least one regrooved circumferential groove (9') has a minimum width of 12 mm.

4. Commercial vehicle tyre according to one of Claims 1 to 3, **characterized in that** at least one regrooved circumferential groove (9') has a minimum width of 15 mm.

5. Commercial vehicle tyre according to one of Claims 1 to 4, **characterized in that** at least one regrooved circumferential groove (9') has a minimum width of 18 mm.

## Revendications

1. Pneu de véhicule utilitaire comprenant une bande de roulement retaillée (6), qui présente :
- dans la direction radiale, au moins deux couches constituées de différents mélanges de caoutchouc, à savoir un recouvrement de bande de roulement (12) et une base de bande de roulement (13) et éventuellement d'autres mélanges de caoutchouc,
- au moins deux rainures périphériques (9) s'étendant dans la direction périphérique du pneu, qui présentent chacune une base de rainure (10),
- au moins une nervure profilée (11) s'étendant dans la direction périphérique du pneu sur la périphérie du pneu, qui est limitée dans son étendue axiale par une ou deux rainures périphériques (9'), et
- éventuellement, en tant que rainures supplémentaires, des rainures transversales (7), des rainures obliques et similaires, la base de bande de roulement (13) s'étendant à l'intérieur de chaque nervure profilée (11) radialement vers l'extérieur sur 0,5 mm à 2,0 mm au-delà d'une extrémité d'enveloppement (h) s'étendant le long des emplacements les plus profonds des rainures périphériques (9) parallèlement à la périphérie de la bande de roulement et
la bande de roulement retaillée (6) directement après le retaillage effectué, présente un volume de rainure (V_{R}) qui vaut au moins 30 % du volume brut (V) de la bande de roulement retaillée (6), le volume brut (V) étant prévu entre une extrémité d'enveloppement (h') en contact radialement depuis l'intérieur avec les rainures périphériques retaillées (9'), la périphérie de la bande de roulement et des portions de flanc de la bande de roulement (6) du côté de l'épaulement et le volume de rainure (V_{R}) étant le volume de toutes les rainures retaillées (9', 7').

2. Pneu de véhicule utilitaire selon la revendication 1, **caractérisé en ce qu'**au moins une rainure périphérique retaillée (9') présente une largeur minimale de 10 mm.

3. Pneu de véhicule utilitaire selon la revendication 1 ou 2, **caractérisé en ce qu'**au moins une rainure périphérique retaillée (9') présente une largeur minimale de 12 mm.

4. Pneu de véhicule utilitaire selon l'une quelconque des revendications 1 à 3, **caractérisé en ce qu'**au moins une rainure périphérique retaillée (9') présente une largeur minimale de 15 mm.

5. Pneu de véhicule utilitaire selon l'une quelconque des revendications 1 à 4, **caractérisé en ce qu'**au moins une rainure périphérique retaillée (9') présente une largeur minimale de 18 mm.
